# EUROPÄISCHE PATENTANMELDUNG

(11) **EP 3 243 880 A1**
(43) Veröffentlichungstag der Anmeldung: **15.11.2017**
(21) Anmeldenummer: 17170057.8
(22) Anmeldetag: 09.05.2017
(51) Int. Cl.: C09D 5/32

(54) **ANSTRICHMITTEL**

(30) Priorität: 09.05.2016 AT 504292016
(71) Anmelder: Schwarz, Herbert Franz, 8720 St. Magarethen (AT); Wintersteller, Matthias, 5020 Salzburg (AT); Zeppetzauer, Alexander Thomas, 5020 Salzburg (AT)
(72) Erfinder: Schwarz, Herbert Franz, 8720 St. Magarethen (AT); Wintersteller, Matthias, 5020 Salzburg (AT); Zeppetzauer, Alexander Thomas, 5020 Salzburg (AT)
(74) Vertreter: Sonn & Partner Patentanwälte

(57) **Zusammenfassung**

Die Erfindung betrifft ein Anstrichmittel zum Aufbringen auf Holz umfassend zumindest einen Grundlack und mindestens ein gelöstes photochromes Silberhalogenid, wobei das Anstrichmittel durch UV-Strahlung den Farbton ändert und dadurch eine Holzoberfläche vor Vergrauen schützt, wobei die Änderung des Farbtons reversibel ist.

## Beschreibung

Die vorliegende Erfindung betrifft ein Anstrichmittel umfassend zumindest einen Grundlack und zumindest einen gelösten photochromen Stoff sowie ein Trägermaterial mit einer Beschichtung aus einem solchen Anstrichmittel.

Die DE 102009037719 offenbart einen Einrichtungsgegenstand mit wenigstens einem transparenten Oberflächenabschnitt, auf dem eine lichtundurchlässige Trägerschicht, eine photochrome Beschichtung und eine Sperrschicht aufgebracht sind, wobei sich die Farbe der photochromen Beschichtung bei Bestrahlung reversibel verändert.

Aus der WO 01/002449 A1 sind photochrome Beschichtungen bekannt, welche als optische Beschichtungen zur Aufbringung auf optische Elemente, beispielsweise Linsen, Verwendung finden. Die genannten Beschichtungen basieren auf Poly(meth)acrylaten.

Die DE 19643773 schließlich betrifft die Verwendung einer photochromen Spirooxazin-Verbindung als Licht-sensitiver Farbstoff zur reversibel veränderlichen Farbgebung oder/und Farbvertiefung von Produkten, ausgewählt aus der Gruppe Textilien, Kunststoffe, Lacke, Farben, Mittel zur Körper- und Schönheitspflege, Druck etc.

Die CN 102873725 schließlich betrifft ein Verfahren zur Herstellung von photochromen Kompositmaterialien auf Basis von Holz, wobei eine Matrixstruktur aus Holz in einem Ultraschallbad mit Ethanol, Aceton und entionisiertem Wasser gereinigt und mit einer Beschichtung aus Polyvinylalkohol versehen wird. Auf diesen Film wird dann ein organisches photochromes Material aufgebracht, getrocknet, mit einer Schicht aus Diisocyanat in Aceton versehen und mit einer weiteren Schicht aus Polyol bedeckt.

Holz spielt sowohl als Werkstoff als auch als Baustoff eine wichtige Rolle. Es wird auch oft als optisches Element eingesetzt. Naturbelassenes bzw. mit transparentem Lack geschütztes Holz weist allerdings den Nachteil auf, dass es vor allem im Außenbereich vergraut.

Im Außenbereich ist der ungeschützte Holzuntergrund den Einflüssen der natürlichen Witterung stark ausgesetzt. Die Bauteile werden von einigen Faktoren, unter anderem Sonnenlicht, Regen, Schnee beansprucht. Die Intensität der Bewitterung ist hauptsächlich von der Exposition des Bauwerks, der geographischen Lage bzw. Seehöhe durch die sich das regionale Klima ergibt und dem baulichen Holzschutz, durch Vordächer oder hervorstehender Bauteile abhängig. Demnach wird das Trägermaterial an ein- und demselben Bauteil unterschiedlich stark bewittert. Werden Holzoberflächen ohne eine Beschichtung eingesetzt, kommt es zu einer unregelmäßigen, fleckigen Verfärbung, die sich mit der Zeit durch Abwitterung, Befall von Mikroorganismen oder Verschmutzung einstellt. Dies gilt ohne Ausnahme für alle Holzarten. Weiters führen Feuchteschwankungen zu vermehrter Rissbildung.

Zudem besteht die Gefahr, andere Bauteile durch ausgewaschene Holzinhaltsstoffe zu beschädigen. Die Festigkeit des Holzes wird durch diese oberflächliche Erosion nicht beeinflusst.

Um das beschriebene Problem von unbehandeltem Holz im Außenbereich zu lösen, wird auf verschiedene Beschichtungssysteme zurückgegriffen, die dieses Verhalten des Werkstoffes für einen gewissen Zeitraum verhindern. Die Beschichtungen müssen dafür einige wesentliche Funktionen erfüllen.

Ein UV-Schutz wird mit Pigmenten, die lichtstabil sein müssen, gewährleistet. Damit wird der Abbau der Holzsubstanz, verursacht durch den kurzwelligen Anteil des Sonnenlichts, verhindert. Des Weiteren wird die Aufnahme von Feuchtigkeit und dadurch die Rissbildung reduziert. Der Feuchteschutz wird durch die Filmdicke des Anstriches eingestellt und ist besonders bei maßhaltigen Bauteilen essentiell. Die Beschichtung verhindert somit übermäßige Feuchteschwankungen und die damit verbundenen Dimensionsänderungen, wie Quellen und Schwinden.

Bei nichtmaßhaltigen Bauteilen, wie Fassaden, Zäunen, usw., hat der Feuchteschutz eine geringe Bedeutung. Daher kommen in diesem Bereich auch Dünnschichtlasuren zum Einsatz, weil Dickschichtlasuren bei Rissen, Ästen, konstruktiven Fugen oder Verletzungen, zu Feuchteansammlungen und folglich zu Fäulnisschäden im Holz führen. Zudem gibt es seit ein paar Jahren Hydrophobierungsmittel für Holz, die mit Hilfe der Nanotechnologie entwickelt wurden. Die Funktionsweise ist mit funktionellen Textilien (z. B. Gore-Tex®) vergleichbar. Demzufolge zeigt die Beschichtung eine stark hydrophobe Wirkung, jedoch ohne jegliche Einschränkung der Wasserdampfdurchlässigkeit.

Eine weitere Aufgabe eines Anstrichmittels ist es, vor einem Befall von Mikroorganismen zu schützen. Bei diesem sogenannten chemischen Holzschutz werden Biozide beigemengt, welche vorbeugend gegen holzverfärbende oder holzzerstörende Pilze beziehungsweise gegen holzzerstörende Insekten wirken.

Außerdem muss auf die richtige Ausführung konstruktiver Holzbauteile Wert gelegt werden, um eine funktionierende Beschichtung garantieren zu können. Fehler in der Materialwahl und Konstruktion können durch eine Schutzbeschichtung nicht ausgewogen werden.
Eine Vergrauung an der Holzoberfläche ist eine natürliche Erscheinung, bei der unter besonderer Beteiligung des UV-Lichtspektrums photochemische, physikalische, beispielsweise Auswaschungen und biologische Prozesse durch Mikroorganismen, wie Pilze und Bakterien, ablaufen. Dabei verändert sich die chemische Zusammensetzung an der Holzoberfläche. Dabei spielt der Schutz gegen UV-Licht eine primäre Rolle. Infolge der Erdatmosphäre, besonders der Ozonschicht, dringt nur UVA- und ein geringer Wert an UVB-Strahlung, mit einer Wellenlänge unterhalb von 300 nm, bis zur Erdoberfläche vor. UV-Strahlung ist in der Lage organische Bindungen zu spalten. Die Schädigung hängt dabei nicht nur von der Energie der UV-Strahlung, sondern auch von der Eindringtiefe und der Einwirkzeit ab. Je pigmentierter, also undurchlässiger, eine Beschichtung ist, desto weniger kann UV-Licht wirksam werden.

Die Verwitterung von Holz tritt ein, sobald dieses für einen längeren Zeitraum den Einflüssen von Sonnenstrahlung, Niederschlag und Luftsauerstoff ausgesetzt wird. Besonders der kurzwellige Anteil des Sonnenlichts, demzufolge die energiereiche UV-Strahlung, spielt eine wichtige Rolle. Durch sie werden Holzbestandteile, im Speziellen Lignin und aromatische Holzinhaltsstoffe, abgebaut. Dabei werden die aromatischen Ringe zwischen der Methoxygruppe und der phenolischen OH- Gruppe geöffnet. Infolgedessen entstehen diverse Mukonsäuren beziehungsweise deren Ester, die sich danach zu auswaschbaren Produkten umsetzen. Spannungsrisse im Holz, hervorgerufen durch Feuchte und Temperaturschwankungen, erhöhen zudem die Zugänglichkeit der Oberfläche für Sauerstoff, Feuchtigkeit und Mikroorganismen. Grundsätzlich hat die Verwitterung eine chemisch-oxidative beziehungsweise photochemische, sowie eine biologische Komponente. Die Zersetzung beginnt photochemisch, verursacht durch die Korrosion, welche von der UV-Strahlung herbeigeführt wird. Aufgrund dessen kommt es bei hellen Holzarten zu einer Holzvergilbung, die mit der Zeit in eine intensive Braunverfärbung übergeht. Letzteres tritt ein, sofern das Holz nur der Sonneneinstrahlung ausgesetzt ist. Das ist zum Beispiel bei alten Almhütten an ihrer wettergeschützten Fassade zu beobachten. Hingegen werden die dunklen Abbauprodukte an ständig beregneten Holzoberflächen laufend ausgewaschen. Schlussendlich führt dies zu einem Ausbleichen des Holzes, da die weißliche Farbe der photochemisch stabilen Zellulose angenommen wird. Früher oder später überlagert sich diesem Vorgang eine Vergrauung, die durch dunkelfarbige, sich in den äußeren Zellschichten ansiedelnde Pilze verursacht wird.

Zudem lagern sich in den freigewordenen Zwischenräumen Staubpartikel ein, die die Verfärbung verstärken. Daneben führt die schnellere Auswaschung des weichen Frühholzes zu einer Art Waschbrettstruktur. Eine weitere unangenehme Folge ist die ungleichmäßige Verwitterung der Oberfläche, welche durch die Wetterexposition, diverse Fassadenvorsprünge und einigen anderen Faktoren herbeigeführt wird.

Die Grauverfärbung, die bei Holzarten wie Eiche und Redwood in den ersten Monaten der Bewitterung auftritt, ist davon zu unterscheiden. Diese Verfärbung ist auf chemische Reaktionen von Inhaltsstoffen, besonders von Gerbstoffen, zurückzuführen. Als Untergrund für Beschichtungen ist vergrautes Holz nicht geeignet, da es zu einer schlechten Filmhaftung führt.

Die chemischen Abbauvorgänge haben neben den genannten Verfärbungen auch eine Verminderung der mechanischen Widerstandsfähigkeit zur Folge. Neben Rissen in der Zellwand bilden sich ebenfalls Risse zwischen den Zellen. Mit fortschreitender Beanspruchung werden die Fasern und Faserelemente zerstört. Die Verwitterungsgeschwindigkeit hängt dabei von der Holzart ab. Sie wird maßgeblich durch die Rohdichte und die Beschaffenheit der organischen und anorganischen Inhaltsstoffe bestimmt. Fette, Wachse und Kautschuk, demnach hydrophobe Inhaltsstoffe, verlangsamen den Zutritt von Wasser und Sauerstoff. Hingegen verringern Inhaltsstoffe mit fungizider oder insektizider Wirkung den biologischen Abbau. Aber auch die Faserrichtung, die Oberflächenbeschaffenheit und andere Faktoren können eine Rolle spielen.

Moderne Anstriche für Holz im Außeneinsatz sind üblicherweise auf Wasserbasis. Durch den weitgehenden Ersatz von organischen Lösungsmitteln - es werden nur geringe Mengen zur Filmbildung benötigt - sind wasserbasierte Beschichtungen umweltfreundlicher, weil keine Bestandteile an die Umgebung abgegeben werden. Qualitativ sind sie mit lösungsmittelhaltigen Beschichtungen vergleichbar und haben sogar einige zusätzliche Vorteile.

Ein wirksamer UV-Schutz von Holzoberflächen im Außenbereich ist nur dann gewährleistet, wenn der UV-Anteil des Lichts vollständig durch das Beschichtungssystem gefiltert wird. Zudem ist es vorteilhaft, wenn auch kurzwellige Anteile des sichtbaren Lichts von der Holzoberfläche reflektiert werden. Bei farblosen Beschichtungen wird dieser Schutz mit Hilfe von transparenten UV-Absorbern oder transparenten Pigmenten, die zusätzlich mit Radikalfängern (HALS) kombiniert werden können, erreicht. Letztere führen dazu, dass radikale, besonders reaktionsfreudige Moleküle oder Atome, die durch Lichteinwirkung entstehen, unschädlich gemacht werden.

Damit eine transparente Beschichtung auch transparent ist, dürfen die UV-Absorber und Pigmente nur geringe Anteile an sichtbarem Licht absorbieren. Die Schichtdicke nimmt ebenfalls Einfluss auf die Absorption des UV-Lichtes. Nur ein geschlossener Trockenfilm kann die Holzoberfläche vor der UV-Strahlung schützen. Der Schutz erhöht sich mit steigender Schichtdicke, jedoch sinkt dabei die Transparenz der Beschichtung. Für transparente Holzbeschichtungen ist eine Mindesttrockenfilmdicke von 30 µm erforderlich, da darunter bei gehobeltem Nadelholz kein geschlossener Film gebildet wird. Der Zusammenhang zwischen Schichtdicke, Konzentration von UV-Absorber und der Lichtdurchlässigkeit einer Beschichtung lässt sich mit dem Lambert-Beerschen Gesetz erklären: Das Lambert-Beersche Gesetz oder Bouguer-Lambert-Beersche Gesetz beschreibt die Abschwächung der Intensität einer Strahlung bei dem Durchgang durch ein Medium mit einer absorbierenden Substanz, in Abhängigkeit von der Konzentration der absorbierenden Substanz und der Schichtdicke.

Lasuren und Lacke unterscheidet man aufgrund ihrer Transparenz voneinander. Lasuren ergeben eine halbtransparente Beschichtung, dementsprechend bleibt die Holzstruktur sichtbar. Lacke bilden einen deckenden Film. Angesichts ihrer stärkeren Filmdicke sind sie dauerhafter gegen UV-Strahlung und Feuchteaufnahme als Lasuren. Bei Lasuren wird der Schutz mit transparentem Eisenoxid erreicht, folglich beschränkt sich die Farbe nur auf Braun- und Rottöne. Hingegen sind mit Lacksystemen viele verschiedene Farbtöne möglich. Beschichtungssysteme lassen sich auch nach ihrer Filmdicke einteilen. Imprägnier- und Dünnschichtlasuren bilden keinen geschlossenen Film. Ihre Aufgabe ist es, tief ins Holz einzudringen. Ab zirka 30 µm Trockenfilmdicke spricht man bei gehobeltem Nadelholz von einem geschlossenen Film. Unter 60 µm ist von einer Mittelschichtlasur die Rede, über 60 µm von Dickschichtlasuren.

Aus dem Stand der Technik sind Holzbeschichtungen, die einen UV-Schutz bieten, bekannt. Hierbei werden unterschiedliche Additive verwendet, die UV- Strahlung absorbieren. Es werden organische bzw. anorganische Bindemittel verwendet, wie z.B. Metalldioxid, insbesondere Titanoxid. Dabei werden bestimmte Wellenlängen absorbiert, wobei die Wellenlänge von UV-Licht von 100 bis 380 nm reicht.

Aufgabe der vorliegenden Erfindung ist es ein Vergrauen einer Holzoberfläche zu verhindern und somit die natürliche Holzfarbe länger aufrecht zu erhalten.

Diese Aufgabe wird durch ein Anstrichmittel zum Aufbringen auf Holz gelöst, wobei das Anstrichmittel zumindest einen Grundlack und mindestens ein gelöstes photochromes Silberhalogenid umfasst, wobei das Anstrichmittel durch UV-Strahlung den Farbton ändert und dadurch eine mit dem Anstrichmittel beschichtete Holzoberfläche vor Vergrauen schützt, wobei die Änderung des Farbtons reversibel ist. Vorzugsweise ist der photochrome Stoff dabei in einem mit dem Grundlack mischbaren Lösungsmittel gelöst und bewirkt, dass das Anstrichmittel nach seinem Auftrocknen bzw. Aushärten unter Einfluss von UV-Strahlung seinen Farbton ändert und dadurch eine mit dem Anstrichmittel beschichtete Holzoberfläche vor Vergrauen schützt. Vorteilhaft ist dabei, dass die Änderung des Farbtons reversibel ist, so dass bei Ausbleiben der UV-Strahlung (Nacht, Schatten) auch keine Änderung des Farbtons mehr erfolgt bzw. eine bereits erfolgte Änderung wieder verschwindet. Das Trägermaterial ist vorzugsweise Massivholz und/oder Holzwerkstoffe.

Ohne an eine Theorie gebunden zu sein wird angenommen, dass die Änderung des Farbtons des Anstrichmittels ähnlich wie bei photochromen Gläsern verläuft, welche unter Einwirkung von UV-Strahlung ihre spektrale Transmission im sichtbaren Bereich reversibel ändern. Dabei erfolgt in den Gläsern eine rasche Eindunklung bis zu einem Sättigungswert, der so lange erhalten bleibt, wie sich die Intensität der Anregungsstrahlung nicht ändert. Nach Ende der Strahlungseinwirkung hellt das Glas dann mit asymptotischer Annäherung an seinen Ausgangszustand langsam wieder auf.

Photochrome Gläser enthalten dabei Silberhalogenide (AgCl, AgBr, AgJ) oder auch Hexaarylbiimidazol in bestimmter Konzentration als Aktivatoren sowie entsprechender, im Stand der Technik bekannter, Sensibilisatoren. In einem diffusionsgesteuerten Ausscheidungsvorgang entstehen und wachsen beim Tempern im Glas kleinste mit den Aktivatoren angereicherte Kristalle als Träger des photochromen Effektes. Bei UV-Bestrahlung bildet sich in ihnen kolloidales Silber, welches die Änderung des Farbtons des Glases hervorruft. Bei Ausbleiben der UV-Strahlung kommt es zur Rückreaktion zwischen dem kolloidalem Silber und dem in den Kristallen verbleibenden Halogen unter Rückbildung von farblosem Silberhalogenid. Entsprechend enthält das erfindungsgemäße Anstrichmittel vorzugsweise auch solche im Stand der Technik an sich bekannte Sensibilisatoren.

Überraschenderweise hat sich gezeigt, dass der photochrome Effekt auch durch Aufbringung von gelösten Silberhalogeniden als photochrome Stoffe in einem Anstrichmittel vorgesehen werden kann und nicht auf die Entstehung von angereicherten Kristallen in einer unterkühlten Schmelze beschränkt ist.

Besonders bevorzugt ist im erfindungsgemäßen Anstrichmittel als photochromes Silberhalogenid Silberiodid enthalten, weil es sehr lichtempfindlich ist und sich unter Sonneneinstrahlung grün-grau verfärbt.

Als vorteilhaft erweist sich, wenn Silberiodid in Thiocyanatsäure, insbesondere Kaliumthiocyanat, gelöst ist, weil Silberiodid in einer beispielsweise wässrigen Kaliumthiocyanatlösung eine gute Löslichkeit aufweist. Lösungsmittel dienen dazu, die Eigenschaften der Beschichtung während des Auftrags und der Filmbildung einzustellen. Da sie die flüchtige Komponente sind, sind sie kein Bestandteil der erzeugten Beschichtung. Lösungsmittel haben die Aufgabe die Beschichtung verarbeitbar zu machen. Durch eine Verringerung der Oberflächenspannung und damit einer Senkung der Viskosität werden die nötigen Fließeigenschaften erreicht.

Bevorzugt sind im erfindungsgemäßen Anstrichmittel 0,5 Gew.-% bis 10 Gew.-% Silberiodid in einer 50%-igen wässrigen Kaliumthiocyanatlösung gelöst bzw. bilden eine Lösung, weil hier einerseits eine gute Löslichkeit des Silberiodids und andererseits auch eine gute Wirksamkeit des Anstrichmittels gegeben ist.

Vorzugsweise werden 3 Gew.-% Lösung und 97 Gew.-% Grundlack gemischt um ein erfindungsgemäßes Anstrichmittel herzustellen, weil dadurch die besten Eigenschaften des Anstrichmittels unter Betrachtung wirtschaftlicher Aspekte erzielt werden können.

Als Grundlack kommt dabei jeglicher im Stand der Technik zur Beschichtung von Holzwerkstoffen geeigneter, vorzugsweise transparenter Lack auf Basis von beispielsweise Cellulosederivaten, Alkydharzen, Polyacrylaten, Epoxyharzen oder Polyurethanen in Frage. Ein solcher Lack, der vorzugsweise ebenfalls auf einem wässrigen Lösungsmittel basiert, kann zusätzlich zu dem gelösten Silberhalogenid noch weitere, im Stand der Technik bekannte Füllstoffe, Hilfsstoffe, Lösungsmittel oder Pigmente enthalten, soweit diese die photochrome Aktivität des Silberhalogenids nicht stören. Besonders bevorzugt umfasst der Grundlack dabei ein oder mehrere, als solche im Stand der Technik bekannte UV-Stabilisatoren zum Schutz vor Vergilbung des Lackes, durch welche der vorzugsweise transparente Grundlack einerseits unansehnlich wird und andererseits die photochrome Wirkung des Silberhalogenids beeinflusst.

Sämtliche Angaben zu Wertebereichen in der gegenständlichen Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Unter sämtlichen Prozentangaben sind im Sinne der vorliegenden Erfindung Gewichtsprozent zu verstehen, sofern nichts anderes angeführt ist.

Die Erfindung beschreibt ein Anstrichmittel umfassend zumindest einen Grundlack und mindestens ein gelöstes Silberhalogenid, wobei das Anstrichmittel aufgrund des photochromen Silberhalogenids unter Einfluss von UV-Strahlung seinen Farbton ändert und dadurch eine Holzoberfläche vor Vergrauen schützt, wobei die Änderung des Farbtons reversibel ist. Das Anstrichmittel kann eine Beschichtung auf einem Trägermaterial, insbesondere Holz, bilden.

Das Anstrichmittel kann auch als Holzbeschichtungsmittel oder Vergrauungsschutzmittel bezeichnet werden und kann zusätzlich als Wetterschutzmittel ausgebildet sein.

Wie bereits erwähnt enthält das Anstrichmittel ein oder mehrere gelöste photochrome Silberhalogenide, vorzugsweise enthält es als photochromen Stoff Silberiodid. Weiters kann das erfindungsgemäße Anstrichmittel vorzugsweise auch zusätzlich photochrome Pigmente enthalten, das sind Farbstoffe, die auf eine Bestrahlung mit UV-Licht mit einer reversiblen Farbtonänderung reagieren. Verändert werden dabei ihre chemische Struktur und das Absorptionsverhalten. Diese reversible Farbtonänderung der zusätzlichen Pigmente wird mit der Zeit stark abgeschwächt, wobei es mittels Nanoverkapselung möglich sein müsste, hier einen dauerhaften Schutz zu erzielen.

Zu der Gruppe der Silberhalogenide gehören:
Silber(I)-fluorid, ein farbloses und als einziges gut wasserlösliches und lichtunempfindliches Silberhalogenid.
Silber(II)-fluorid, ein nicht komplexes, zweiwertiges Silbersalz.
Silber(I)-chlorid, ein weißes, kristallines in Wasser unlösliches Pulver.
Silber(I)-bromid, eine hellgelb gefärbte und ebenfalls wasserunlösliche Silberverbindung. Außerdem ist es lichtempfindlicher als Silberchlorid.
Silber(I)-iodid, ein wie Silberbromid gelbes, in Wasser nicht lösbares Salz.

Der im Anstrichmittel erfindungsgemäß eingesetzte photochrome Stoff ist insbesondere Silberiodid, ein gelbliches und wasserunlösliches Salz. Es ist eine chemische Verbindung aus Silber und lod. Die Verhältnisformel lautet Agl. Natürlich kommt Silberiodid als Mineral Jodargryit vor. Gewonnen wird es durch Ausfällen einer Silbernitrat-Lösung mit Hilfe von Kaliumiodid.

AgNO₃ + Kl → Agl + KNO₃

Im Gegensatz zu Silberchlorid und Silberbromid lässt sich Silberiodid nicht in Ammoniak lösen. Agl lässt sich nur in starken Komplexbildnern, wie Cyaniden oder Thiocyanaten lösen. Des Weiteren ist es sehr lichtempfindlich und zerfällt unter Lichteinfluss nach und nach in seine Elemente. Unter Sonneneinstrahlung verfärbt sich das Silberiodid grün-grau.

Die Lösung, welche vorzugsweise ein eigener Bestandteil des Anstrichmittels ist, umfasst dabei beispielsweise zumindest Silberiodid und Thiocyanatsäure, insbesondere Kaliumthiocyanat, wobei Silberiodid in einer wässrigen Kaliumthiocyanatlösung gelöst ist. Dabei bilden beispielsweise 0,5 Gew.-% bis 10 Gew.-% Silberiodid und/oder eine Mischung mit Hexaarylbiimidazol in einer 50 Gew.- % wässrigen Kaliumthiocyanatlösung gelöst die Lösung, wobei die angegebenen Inhaltsstoffe bei geeignetem Grundlack auch direkt in diesem gelöst sein können.

Beschichtungsstoffe bestehen grundsätzlich aus flüchtigen und nichtflüchtigen Bestandteilen. Der flüchtige Bestandteil, folglich ein Lösungsmittel, verdampft während des Trocknungsprozesses. Die nichtflüchtigen Bestandteile bleiben dabei als haftender Film auf dem beschichteten Objekt zurück. Zu den nichtflüchtigen Komponenten zählen Bindemittel, Pigmente und Füllstoffe, sowie Additive. Das Bindemittel sorgt für eine gleichförmige Dispersion mit Pigmenten und Lösungsmitteln und ist für eine optimale Trocknung und für die Oberflächenbeschaffenheit nach der Trocknung zuständig. Die wesentlichen Bestandteile sind Binde- und Lösungsmittel. Pigmente sind keine Notwendigkeit in einer Beschichtung. Es gibt auch pigmentfreie Klarlacke und lösemittelfreie Pulverlacke.

Als Basis für das erfindungsgemäße Anstrichmittel wird vorzugsweise ein wasserbasierender herkömmlicher Grundlack auf Acrylatbasis verwendet. Diese kann vorzugsweise weitere verschiedene Schutzstoffe enthalten um die gewünschten Effekte zu erreichen. Es werden entweder einzelne Stoffe oder mehrere, kombinierte Stoffe mit dem Grundlack vermengt. Die Mittel werden gewogen und prozentuell eingemischt. Anschließend werden sie mittels Verrührstab homogen gerührt und mit einem Pinsel auf eine saubere Fichtenholzoberfläche aufgetragen. Nach Eintrocknen der ersten Schicht wird daraufhin ein zweites Mal beschichtet.

Als Vergleich werden aus dem Stand der Technik bekannte Beschichtungen laut Produktbeschreibung auf die Holzoberfläche aufgetragen. Bei den meisten Produkten muss eine saubere, schmutzfreie Oberfläche gewährleistet werden. Anschließend muss entweder eine Grundierung oder sofort die fertig gemischte erfindungsgemäße Beschichtung aufgetragen werden. Bei der Beschichtung mit der Grundierung muss eine gewisse Zeit gewartet werden, bis die eigentliche erfindungsgemäße Beschichtung aufgepinselt werden kann. Nach definierten Wartezeiten muss bei jeder Beschichtung ein zweites Mal gestrichen werden.

Die Oberflächenbehandlung von Fichtenholz ist kein Problem, so lange Harzgallen ausgebessert sind. Es kann jedoch zu einer ungleichmäßigen Aufnahme der Beschichtung kommen, wenn ein Bakterienbefall, zum Beispiel nach einer langen Wasserlagerung, vorliegt. Die Fichte ist eine leichte und weiche Holzart, was eine Darrdichte von durchschnittlich 430 kg/m³ und eine Brinellhärte von 12 N/mm² untermauert. Zudem weist sie eine geringe Angleichsgeschwindigkeit der Holzfeuchte an das Umgebungsklima auf. Das Holz der Fichte gilt als mäßig schwindend, demnach ist das Stehvermögen gut. Die Dauerhaftigkeit der Fichte ist eher als schlecht anzusehen, dementsprechend ist sie in der Klasse 4 gelistet. Für einen Befall mit Anobien oder Hausbock, ist sowohl der Splint als auch das Reifholz anfällig. Die Jahrringgrenzen sind durch das abschließende, dunkle Spätholz und das im neuen Jahrring beginnende helle Frühholz deutlich gekennzeichnet. Jahrringbreiten und Spätholzanteile, die Einfluss auf die Farbe und Struktur nehmen, können durch unterschiedliche Standorte, Alter des Baums und Kulturmaßnahmen stark schwanken. Der Spätholzanteil beträgt jedoch maximal ein Viertel der Jahrringbreite. Frisch gehobeltes Fichtenholz ist nahezu weiß und matt glänzend, da das helle Frühholz überwiegt. Das Spätholz ist gelblich bis rotbraun gefärbt. Unter Lichteinfluss neigt das Holz zum Vergilben, später stellt sich ein honigbraun-gelber Farbton ein.

Die gekauften und auch die erfindungsgemäßen Mixturen wurden im Anschluss im UV-Schnellbewitterungsstand und auch am Freiluftbewitterer getestet.

Die benutze Bewitterungskammer ist für eine beschleunigte Bewitterung ausgelegt. Es werden Sonnenlicht, Regen und Tau künstlich hergestellt. Durch diese Einflussfaktoren werden Schäden in wenigen Wochen beziehungsweise Monaten nachgestellt. Das Gerät testet Materialien, indem es diese bei kontrolliert hohen Temperaturen und eingestellten Zyklen dem UV-Licht und der Feuchtigkeit aussetzt. Es simuliert die Wirkung von Sonnenlicht mit speziellen UV-Leuchtstofflampen, die Wirkung von Tau und Regen wird mit Sprühwasser simuliert.
Der benutze UV-Tester ist für beschleunigte Bewitterung ausgelegt. Reproduziert werden Sonnenlicht, Regen und Tau in einer Alterungsprüfkammer. Durch diese Einflussfaktoren werden gewollte Schäden in wenigen Wochen beziehungsweise Monaten reproduziert, welche im Freien Jahre benötigt hätten.

Das UV Gerät testet Materialien, indem es diese bei kontrolliert hohen Temperaturen und eingestellten Zyklen dem UV-Licht und der Feuchtigkeit aussetzt. Es simuliert die Wirkung von Sonnenlicht mit speziellen UV-Leuchtstofflampen, die Wirkung von Tau und Regen wird mit Sprühwasser simuliert.

Der Freiluftbewitterungsstand ist ein Untersuchungsverfahren zur Ermittlung der Beständigkeit von Werkstoffen unter wechselnden Klimabedingungen.
Proben werden auf besonderen Gestellen angebracht und der direkten Bewitterung ausgesetzt. Meist mit einer Neigung bei 45° nach SW oder S. Die Freiluftbewitterung wird neben dem UV-Tester auch zur Bestimmung der Beständigkeit von Oberflächenbehandlungen hergenommen. Im Gegensatz zur Alterungsprüfkammer sind Probleme der Freiluftbewitterung, ihre lange Zeitdauer aber auch die Abhängigkeit von den spezifischen Bedingungen des Bewitterungsortes, der Jahreszeit sowie den in verschiedenen Jahren unterschiedlichen Klimabedingungen.

Im UV-Tester wurden die Proben 1895 Stunden geprüft und am Freiluftbewitterungsstand 4441 Stunden.

Bei eintretender UV-Strahlung verändert die mit dem erfindungsgemäßen Anstrichmittel hergestellte Beschichtung ihren Farbton, sie wird dunkler. Die Intensität der Veränderung hängt unter anderem von der Sonneneinstrahlung, der Außentemperatur und andern Faktoren ab. Die Änderung des Farbtons wird durch die Beigabe des photochromen Stoffes erreicht, der dem Grundlack beigemengt wird. Bei Rückgang der UV-Strahlung erreicht die Beschichtung nach einer gewissen Zeit, die gegebenenfalls einstellbar ist, wieder ihren Ausgangsfarbton, der Prozess ist demnach reversibel. Durch den Vorgang der Änderung des Farbtons wird die Holzoberfläche bei Vorliegen von UV-Strahlung dauerhaft vor dieser und somit vor dem Vergrauen geschützt. Der hauptsächliche Einsatzbereich der Beschichtung ist im konstruktiven Holzschutz vorgesehen, um die Dauerhaftigkeit des Werkstoffes zu erhöhen. Zudem kann die Farbtonänderung auch als dekorativer Aspekt verwendet werden, unter anderem für Logos, Schriftzüge, etc. Silberhalogenide als Beschichtungsstoff einzusetzen ist bisher nur bei Brillengläsern als Verdunkelungsmittel bekannt. Zuerst muss ein Lösungsmittel gefunden werden, worin sich Silberjodid löst. Da es wasserunlöslich ist werden verschiedene andere Lösungsmittel hergenommen, die in der unteren Tabelle dargestellt sind.

| **verwendete Lösungsmittel** | **Löslichkeit** | **Bemerkung** |
|---|---|---|
| 40% Alkohol | nicht löslich | Silberjodid verfärbte sich grün/gelblich |
| reiner Ethanol | nicht löslich | gelbliche Verfärbung |
| 25% Ammoniak | ansatzweise löslich | graue Verfärbung |
| Nitroverdünnung | nicht löslich | gelbliche Verfärbung |
| 100% Methanol | nicht löslich | grünliche Verfärbung |
| Nagellackentferner | nicht löslich | gelbliche Verfärbung |
| 100% Balsamterpentin | nicht löslich | schmierige Lösung- Absetzungen am Boden |
| 20% Kaliumthiocyanat | teilweise löslich | fast alles aufgelöst |
| 50% Kaliumthiocyanat - 50% H₂O | löslich | gut löslich |

Kaliumthiocyanat wirkt dabei durch Komplexbildung als Lösungshilfsmittel. Eine Mischung von 50% erzielt das beste Ergebnis bezüglich Löslichkeit. Wasser ist das eigentliche Lösungsmittel.

Es muss nun eine geeignete Mischung für ein Fichtenholzbrett hergestellt werden. Als Trägermaterial wurden Fichtenbretter mit denselben Dimensionen verwendet, die auch schon bei den vorigen Versuchsreihen hergenommen wurden. Der Grundlack war ebenso derselbe und es wurde auch zwei Mal aufgetragen. In der unteren Tabelle werden die verschiedenen Mischungen zwischen Grundlack und Silberjodid beschrieben.

| Nr. | Bestandteile | Prozentueller Anteil (%) |
|---|---|---|
| 1 | Silberjodid | 1,21% |
| | Wasser | 20% |
| | Kaliumthiocyanat | 20% |
| | Grundlack | 58,79% |
| 2 | Silberjodid | 1,86% |
| | Wasser | 18,97% |
| | Kaliumthiocyanat | 18,91% |
| | Grundlack | 60,26% |
| 3 | Silberjodid | 3,33% |
| | Wasser | 33,33% |
| | Kaliumthiocyanat | 33,33% |
| | Grundlack | 30% |
| 4 | Silberjodid | 24,19% |
| | Wasser | 25,81% |
| | Kaliumthiocyanat | 25,81% |
| | Grundlack | 24,19% |

Die gesamten Mischungen von 1-4 sind beim ersten Auftragen milchig/weiß und weisen eine leichte Blasenbildung auf. Die Mischung 4 ist sehr flüssig. Dies lässt auf den hohen Wassergehalt in der Kombination rückschließen.

Nach Trockenwerden der Proben ist sehr auffällig, dass die Probe 4, also mit einem Silberjodid Anteil von 50%, sehr kristallig wirkte und keine Transparenz mehr aufwies.
Die beste Probe ist Nr. 2. Die 3% Silberiodidmischung ist komplett transparent. Außerdem wird der erwünschte Vorgang des Verdunkelns und die anschließende Wandlung in den Ausgangsfarbton erreicht.

Untenstehend ist eine Versuchsreihe, mit unterschiedlichen Mischungsverhältnissen der Formulierung angegeben.

| **Nr.** | **Verwendete Substanzen** | **Mischungsverhältnis (%)** | **tatsächliche Mischungen (g)** |
|---|---|---|---|
| 1. | Silberjodid 50%Kaliumthiocyanat, 50% H₂O Grundlack | 2 % minimalste benötigte Lösung 98 % | 0.02 g 0.33 -H₂O ,0.33 -Kal. 0.97 g |
| 2. | Silberjodid 50%Kaliumthiocyanat, 50% H₂O Grundlack | 3 % minimalste benötigte Lösung 97 % | 0.30 g 3.06 g -H₂O ,3.05 g -Kal. 9.72 g |
| 3. | Silberjodid 50%Kaliumthiocyanat, 50% H₂O Grundlack | 10 % minimalste benötigte Lösung 90 % | 0.5 g 5 g -H₂O ,5 g -Kal. 4.5 g |
| 4. | Silberjodid 50%Kaliumthiocyanat, 50% H₂O Grundlack | 50 % minimalste benötigte Lösung 50 % | 1.5 g 16 g -H₂O,16 g -Kal. 1.5 g |

Die Mischungen, mit den Nummern 3 und 4, sind beim Auftragen milchig-weiß und weisen eine Fleckenbildung auf.

Die Mischung 4 ist sehr flüssig. Dies lässt sich auf den hohen Wassergehalt in der Kombination zurückführen. Nach dem Trocknen der Beschichtung, weist die Probe 4, mit einem Silberiodid Anteil von 50%, keine Transparenz mehr auf und Kristalle bildeten sich. Dieser Umstand lässt sich mit dem geringen Anteil an Grundlack in der Beschichtung erklären.

Die Probe, welche das beste Ergebnis in Sachen Farbtonänderung und Transparenz, erreicht, ist die Mixtur mit 3% Silberiodid. Außerdem zeigt sie die schnellste Wandlung in den Ausgangszustand auf. Jedoch werden die Proben nach einer längeren Bewitterungszeit irreversibel geschädigt, da sich der Stoff nach der Zeit durch die chemische Reaktion aufbraucht und der Ausgangsfarbton wird nicht mehr angenommen.

Nachdem das Silberiodid gelöst ist, wird es gewogen und prozentuell in den Grundlack eingemengt. Anschließend wird das Gemisch mittels Rührstab homogen vermischt und mit einem Pinsel auf eine Fichtenholzoberfläche aufgetragen. Für den Auftrag der Mixturen, muss eine saubere, schmutzfreie Oberfläche gewährleistet sein. Nach dem Antrocknen der ersten Schicht wird ein weiteres Mal beschichtet.

Die fertigen Proben werden anschließend für eine Stunde in die Sonne gelegt, um zu überprüfen, ob die gewünschte Wirkung eintritt.

Die Kombinationen, die in der Sonne am besten funktionierten, werden anschließend für 80 Stunden in einer Bewitterungskammer geprüft. Da die Kammer in wenigen Stunden, die Bedingungen von mehreren Tagen bzw. Wochen darstellt, kann man erkennen ob die Proben für längere Zyklen im Freien geeignet wären.

Das Problem der eingeschränkten Dauer der reversiblen Fähigkeit könnte mit einer Nanoverkapselung gelöst werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung ist jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

## Patentansprüche

1. Anstrichmittel für Holz umfassend zumindest einen Grundlack und mindestens ein gelöstes photochromes Silberhalogenid, wobei das Anstrichmittel durch UV-Strahlung den Farbton ändert und dadurch eine mit dem Anstrichmittel beschichtete Holzoberfläche vor Vergrauen schützt, wobei die Änderung des Farbtons reversibel ist.

2. Anstrichmittel nach Anspruch 1, **dadurch gekennzeichnet, dass** als photochromes Silberhalogenid Silberiodid enthalten ist.

3. Anstrichmittel nach einem der Ansprüche 1 oder 2, **dadurch gekennzeichnet, dass** Silberiodid in Thiocyanatsäure, insbesondere Kaliumthiocyanat, besonders bevorzugt in einer wässrigen Kaliumthiocyanatlösung gelöst ist.

4. Anstrichmittel nach zumindest einem der Ansprüche 1 bis 3, **dadurch gekennzeichnet, dass** 0,5 Gew.-% bis 10 Gew.-% Silberiodid in einer 50 Gew.-% wässrigen Kaliumthiocyanatlösung gelöst ist/sind.

5. Anstrichmittel nach zumindest einem der Ansprüche 1 bis 4, **dadurch gekennzeichnet, dass** es aus 3 Gew.-% Lösung und 97 Gew.-% Grundlack gebildet ist.

6. Trägermaterial, insbesondere Massivholz und/oder Holzwerkstoffe, **dadurch gekennzeichnet, dass** es eine Beschichtung mit einem Anstrichmittel nach einem der Ansprüche 1 bis 5 umfasst.
